# EUROPEAN PATENT APPLICATION

(11) **EP 1 426 167 A1**
(43) Date of publication of application: **09.06.2004**
(21) Application number: 03027498.9
(22) Date of filing: 02.12.2003
(51) Int. Cl.: B29C 71/04, B65D 1/32, B65D 35/08, B29D 22/00, B29C 35/08

(54) **Tubular container and method of manufacture**

(30) Priority: 05.12.2002 FR 0215383
(71) Applicant: Crown Cork & Seal Technologies Corporation, Alsip, IL 60803-2599 (US)
(72) Inventor: Lionnet, Christian Vincent, 77440 Armentières en Brie (FR); Duchossoy, François, 76370 Neuville lès Dieppe (FR); Gregoire, Jean-François, 76370 Rouxmesnil Bouteilles (FR)
(74) Representative: Smith, Debra Jane Clare

(57) **Abstract**

The invention provides a method of manufacturing a mono-layer polyolefin package (9) for isocyanate glue, by subjecting a relatively thin walled package (9) (wall thickness about 0.5-0.6 mm) to a dose of ionising radiation of above 50 kilograys. The ionising radiation causes cross-linking of the polyolefin, reducing the oxygen permeability of the resulting package to a level satisfactory for packaging isocyanate glues. The invention further comprises a package having a wall thickness of between 0.5 and 0.6 mm and a cross-linking ratio of greater than 60%.

## Description

The present invention relates to a method of manufacture of a flexible, hollow, package, which is low cost and suitable for mass production. In particular, the invention relates to a method of manufacture of a low-cost, squeezable container for glue and more particularly for isocyanate glue, which is sensitive to degradation when exposed to air (more particularly oxygen). The invention also relates to a package suitable for packaging isocyanate glue, manufactured according to the method.

Polyolefin-based packages are well known in the prior art and are widely used because of their low cost in relation to the mechanical and / or chemical properties that can be obtained. Other polymers, such as polyamides for example, allow better properties to be obtained but at higher cost.

Polyolefin-based packages are already used for packaging isocyanate glues and are completely satisfactory for obtaining certain specific properties. However, isocyanate glues are particularly sensitive to degradation by oxygen and therefore, the polyolefin-based packages of the prior art have to be made with thick walls (generally a thickness greater than 1.2mm), to ensure the tightness of the package and to prevent the ingress of oxygen.

In order to extract the glue from the package, a user has to exert a force on the outer walls of the package to compress it. This compression reduces the internal volume of the package and thereby provides distribution of the glue. However, due to the thickness of the walls of the package, the flexibility of the package is low and the user must exert high force to achieve the necessary deformation of the package walls (in the order of 6 daN for a deflection of 4mm). This high force does not allow the user precise dosage of the glue, which is particularly important when using high strength glues such as isocyanate glue.

The prior art also suggests the use of thinner, multi-layer walls, including a layer of oxygen barrier material, to minimise the ingress of oxygen into a package, but such multi-layer packages are considered too expensive for packaging low-cost products such as glues.

Therefore, the aim of the present invention is to overcome this drawback by providing a method of producing a low-cost, polyolefin-based package having low permeability, whilst retaining a high flexibility.

Accordingly the present invention provides a method of manufacture of a flexible, hollow package suitable for containing an isocyanate glue, having a single-layer wall based upon at least one polyolefin, characterised in that the thickness of the wall is between 0.5 and 0.6 mm and that after forming, the package is subjected to a dose of ionising radiation of between 50 and 100 kilograys. As is well known, the gray is a unit of radiation energy per unit of mass.

The thickness of the walls of the package are kept at between 5 and 6 mm, to maintain the flexibility of the package and thereby allow precise dosing of the package contents by a user. Normally, a polyolefin-based package having this wall thickness would allow the ingress of oxygen, which is unacceptable for isocyanate glues. However, once formed, the package is subjected to a dose of ionising radiation of between 50 and 100 kilograys, which causes cross-linking of the polyolefin. The ionising radiation does not produce any chemical reside likely to diffuse into the contents of the package, but the cross-linking of the polyolefin, reduces its oxygen permeability to acceptable levels.

Additionally, the present invention provides a flexible, hollow package suitable for containing an isocyanate glue, having a single-layer wall based upon at least one polyolefin, characterised in that the thickness of the wall is between 0.5 and 0.6 mm and the cross-linking ratio of the polyolefin is higher than 60%.

The present invention will now be described, by way of example only, with reference to the accompanying drawings, in which:
Figure 1 shows a schematic, perspective view of an installation allowing the use of the process according to the invention; and
Figure 2 shows a graph representing the force to be developed as a function of the deformation achieved for two tubes filled with glue.

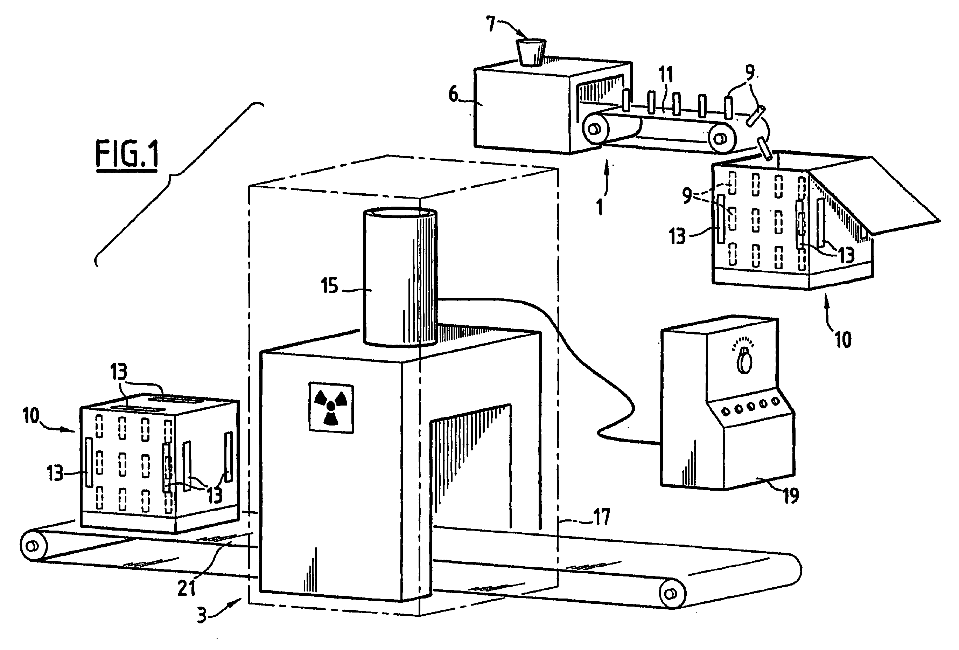

The installation represented in Figure 1 shows (generally) the equipment required for the manufacture of flexible hollow packages, according to the method of the invention. The installation comprises a unit 1 for forming hollow packages and an ionisation unit 3 for treating said packages once formed. The forming unit 1 comprises a forming assembly 6 and means 7 for feeding the forming assembly 6 with a material based upon at least one polyolefin. The forming assembly 6 generally comprises at least one extruder and allows packages 9 to be made starting from the above-mentioned material. Different types of forming processes can be used in the assembly 6, such as injection blow moulding, extrusion blow moulding, injection moulding and injection moulding of tubes closed at one end.

In order to use the process according to the invention, the material may be selected from among polypropylene, low-density polyethylene, high-density polyethylene or various copolymers based on polypropylene or polyethylene, provided the material presents a sufficiently wide amorphous phase to allow the creation of covalent bonds and to promote cross-linking. Preferably, the material is chosen from among the linear high-density polyethylenes, whose molecular weight is greater than 80 000 g/mol.

In order to use the process according to the invention, the forming unit 1 is adapted to produce hollow pieces 9 made of polyolefin, whose wall thickness is between 0.5 mm and 0.6 mm. The pieces 9 are arranged in an appropriate container 10 by means of a conveyor 11. The distribution of the pieces 9 in the container 10 are optimised so as to expose a maximum number of the pieces 9 to the ionising radiation in the ionisation unit 3, as homogeneously as possible. Typically, the container 10 is of parallelepiped form with dimensions roughly equal to 1.0 m x 1.2 m x 2.5 m. Means 13 for measuring the dose of radiation received are arranged on the faces of the container 10.

The ionisation unit 3 comprises a radioactive source 15 arranged in a confined enclosure 17, control means 19 and a conveyor 21. The radioactive source 15 emits an ionising radiation, in particular β or γ. It may take the form of a particle accelerator or of a radioactive source, such as cobalt 60. The control means 19 is arranged outside the confined enclosure 17, to make it possible to adjust the radiation dose and to regulate the homogeneity of the energy applied by the radioactive source 15. The doses applied go from 5 to 105 kilograys by steps of 25 kilograys. The ionisation unit 3 also includes a conveyor 21, which allows the container 10 containing the hollow sealed tubes 9 to be brought into the confined enclosure 17 and the container 10 to be transported outside this enclosure, once the treatment has been carried out.

In order to use the process according to the invention, the hollow sealed tubes 9 produced by the forming unit 1 are subjected to a radiation higher than 50 kilograys in the ionisation unit 3. Preferably, the dose received by the hollow sealed tubes 9 is between about 50 and 100 kilograys. Such a dose allows tubes with a wall thickness of between 0.5 and 0.6 mm to be obtained having a cross-linking ratio higher than 60 %. This cross-linking ratio is measured by the gel rate obtained during the dissolving of a sample in a solvent suitable for dissolving an un-cross-linked polyolefin.

In the process according to the invention, the hollow packages 9 are first formed in the forming unit 1, in such a way that their wall thickness is between 0.5 mm and 0.6 mm and then arranged in the container 10. The container 10 is then transported to the ionisation unit 3 on the conveyer 21, where the hollow packages 9 are subjected to a radiation dose of higher than 50 kilograys. Next, the packages receive their contents on filling lines (not represented) and are closed and sealed by a conventional device.

Flexible tubes suitable for isocyanate glues can be made from a material chosen from among the linear high-density polyethylenes, whose molecular weight is greater than 150,000 g/mol. One example of a suitable material is FINATHENE® 5502, marketed by the French company ATOFINA. A tube made according to the process of the invention and a control tube of identical geometry was formed from FINATHENE® 5502. The tubes were formed by injection blow moulding, with a wall thickness of roughly 0.55 mm and then subjected to a β radiation of roughly 100 kilograys. The experimental conditions are itemised in the table below.

| | Tube made according to the process of the invention | Control tube (not made according to the process of the invention) |
|---|---|---|
| Mass of FINATHENE® 5502 (g) | 5.5 | 7.0 |
| Thickness of walls (mm) | 0.55 | 1.20 |
| Ionisation Dose received (Kilograys) | 100 | None |

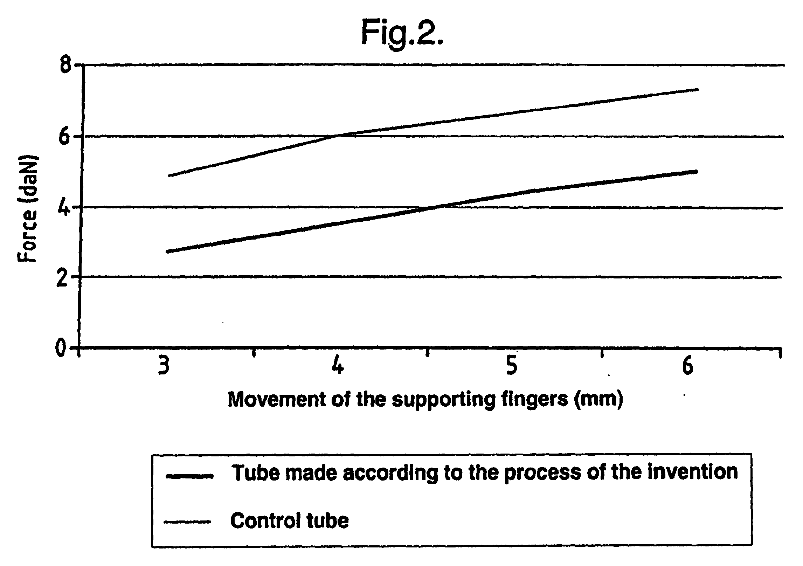

The tubes were then filled with an isocyanate glue. To test their flexibility, the filled tubes were then arranged in contact with two supporting fingers movable with respect to two opposite walls of the tube. The fingers were moved towards one another and the force necessary to obtain this movement was measured by means of a dynamometer. The movement of the fingers is representative of the amount of deformation of the tube. The force developed as a function of the movement of the supporting fingers for the two tubes is represented in Figure 2.

In order to obtain a satisfactory permeability of the package to oxygen (suitable for the preservation of isocyanate glues), the thickness of the walls of the tube must be 0.5 mm for the tube made by the process according to the invention and 1.20 mm for the control tube.

By reference to Figure 2, one can see that the force required to obtain a movement of the fingers of 3 to 6 mm is about 40 % less for the tube made according to the process of the invention compared with the control tube.

The method of manufacture according to the invention provides a means for forming a polyolefin-based package having both high chemical resistance and flexibility, which allows precise dosage of the contents of the package by a user. This flexibility is obtained without compromising the permeability of the package and without having to resort to the use of an oxygen barrier layer in a multi-layer construction. This process does not necessitate the use of dangerous chemical compounds, such as peroxides, during the forming of the package and the absence of such compounds makes it possible to avoid the diffusion of residues into the contents of the package during storage. Finally, this process makes it possible to obtain low-cost packages with properties equivalent to those based on more technical polymers, such as polyamides or chlorine based polymers, such as PVC.

## Claims

1. A method of manufacture of a flexible, hollow package (9) suitable for containing an isocyanate glue, having a single-layer wall based upon at least one polyolefin,
**characterised in that**
- the thickness of the wall is between 0.5 and 0.6 mm and that after forming,
- the package is subjected to a dose of ionising radiation of greater than 50 kilograys.

2. A method of manufacture according to claim 1, wherein the package is subjected to a dose of ionising radiation of between 50 and 100 kilograys.

3. A method of manufacture according to any one of the preceding claims, wherein the dose of ionising radiation is about 100 kilograys.

4. A method of manufacture according to claim 1 or claim 2, wherein the polyolefin is based upon high-density polyethylene with molecular mass greater than 80,000 g/mol.

5. A method of manufacture according to any one of the preceding claims, wherein the polyolefin is based upon linear high-density polyethylene with molecular mass greater than 150,000 g/mol.

6. A method of manufacture according to any one of the preceding claims, wherein the package (9) is formed by injection blow moulding before it is subjected to the ionising radiation.

7. A flexible, hollow package (9) suitable for containing an isocyanate glue, having a single-layer wall based upon at least one polyolefin,
**characterised in that**
- the thickness of the wall is between 0.5 and 0.6 mm and
- the cross-linking ratio of the polyolefin is higher than 60%.
